# EUROPEAN PATENT APPLICATION

(11) **EP 1 623 778 A1**
(43) Date of publication of application: **08.02.2006**
(21) Application number: 05016808.7
(22) Date of filing: 02.08.2005
(51) Int. Cl.: B22D 43/00, F27D 3/15, C21C 5/46

(54) **Automatic deslagging apparatus, particularly for plants for processing nonferrous metals**

(30) Priority: 04.08.2004 IT mi20041602
(71) Applicant: Meccano System S.R.L., 22029 Uggiate - Trevano CO (IT)
(72) Inventor: Mossi, James, 22029 Uggiate-Trevano (Como) (IT)
(74) Representative: Forattini, Amelia

(57) **Abstract**

An automatic deslagging apparatus for plants for processing nonferrous metals, having: an anthropomorphic robot, coupled to a positioning and chasing unit which is adjacent to a conveyor belt that comprises trays. Each tray contains molten metal having slag on its on the surface. A skimmer assembly, actuated by the robot, suitable to act on the surface of the metal in order to eliminate the slag; a complementary skimmer assembly, which is rigidly coupled to the positioning and chasing unit and cooperates with the skimmer assembly in order to eliminate the slag; a temporary engagement means, which is adapted to temporarily rigidly couple in their movement the conveyor belt and the positioning and chasing unit; a discharge area, which receives the slag removed by means of the skimmer assembly; a rotating head with a tool changing system adapted to receive the skimmers used by the robot at the end of the cycle and provide clean skimmers for a new cycle.

## Description

The present invention relates to an automatic deslagging apparatus, particularly for plants for processing nonferrous metals.

Deslagging is a process suitable to eliminate, during metallurgical work, the impurities or slag present on the surface of the molten metal, in the specific case, nonferrous metals.

Currently, in the field of foundry, deslagging is performed manually for plants with a continuous casting system.

The work environment is generally noxious and dangerous, and in certain plants, for example in plants for processing lead obtained from recycled batteries, the operators are forced to work with a whole range of precautions in order to prevent health problems.

Despite the attentions and precautions currently implemented in plants of this type for prevention and control, with the consequent considerable costs, the operator must still work manually on a material that is constantly at temperatures above 300°C and therefore must be protected appropriately against the heat as well.

Shifts are frequent, both for safety reasons and due the type of work, which is repetitive and alienating, and accordingly the number of workers is high.

The aim of the present invention is to provide a deslagging machine, particularly for plants for processing nonferrous materials, that overcomes the drawbacks of the cited prior art.

An object of the invention is to provide an automatic deslagging machine that allows to eliminate direct contact between human workers and the material being processed.

A further object of the invention is to provide a deslagging machine that allows higher productivity than traditional systems.

A further object is to provide an apparatus that allows to reduce production costs.

A further important object of the invention is to provide an apparatus that provides higher safety as regards the organization of production, providing a constant productivity that is not dependent on the efficiency of the workers.

This aim and these and other objects, which will become better apparent hereinafter, are achieved by an automatic deslagging apparatus, particularly for plants for processing nonferrous metals, characterized in that it comprises: an anthropomorphic robot, which is coupled to a positioning and chasing unit which is adjacent to a conveyor belt that comprises trays, each of said trays containing molten metal, slag to be eliminated being present on the surface of said molten metal; a skimmer assembly, actuated by said robot, adapted to act on the surface of the metal in order to eliminate the slag; a complementary skimmer assembly, which is rigidly coupled to said positioning and chasing unit and cooperates with the skimmer assembly in order to eliminate the slag; a temporary engagement means, which is adapted to temporarily rigidly couple in their movement the conveyor and the positioning and chasing unit; a discharge area, which receives the slag removed by means of the skimmer assembly; a cleaning means for cleaning the skimmer assembly, said cleaning means being adapted to clean the skimmer assembly at the end of the cycle in order to provide a clean skimmer assembly for a new cycle.

Further characteristics and advantages will become better apparent from the description of preferred but not exclusive embodiments of the invention, illustrated by way of non-limiting example in the accompanying drawings, wherein:

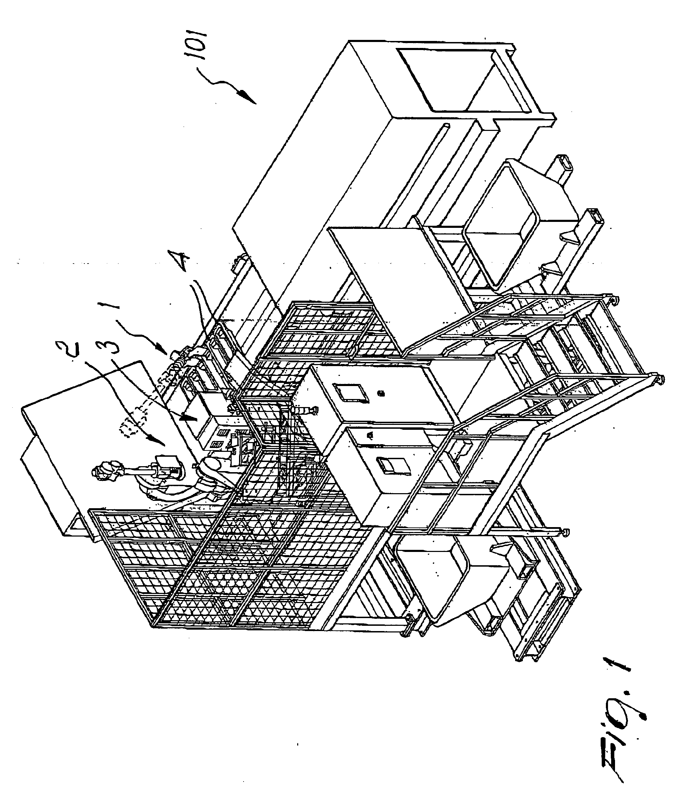

Figure 1 is a perspective view of the automatic deslagging apparatus according to the invention, applied to a plant for processing lead;

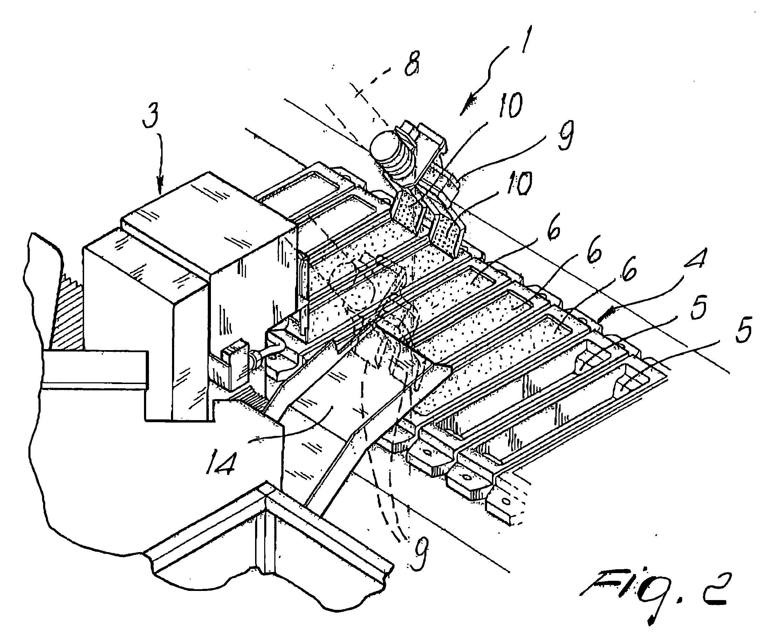

Figure 2 is an enlarged-scale perspective view of a portion of the deslagging apparatus according to the invention;

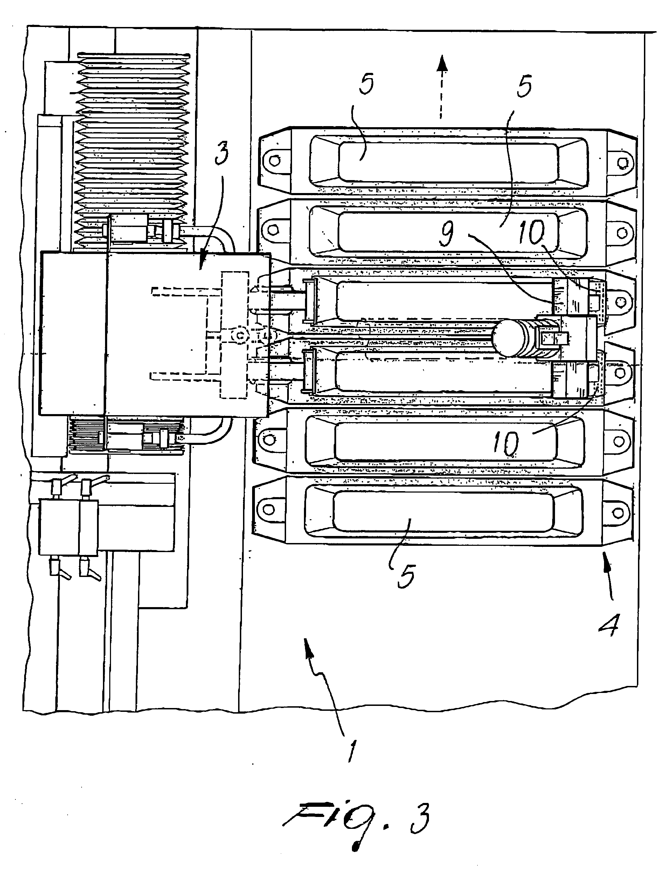

Figure 3 is a plan view of the automatic positioning and chasing unit and of the skimmer assembly of the apparatus;

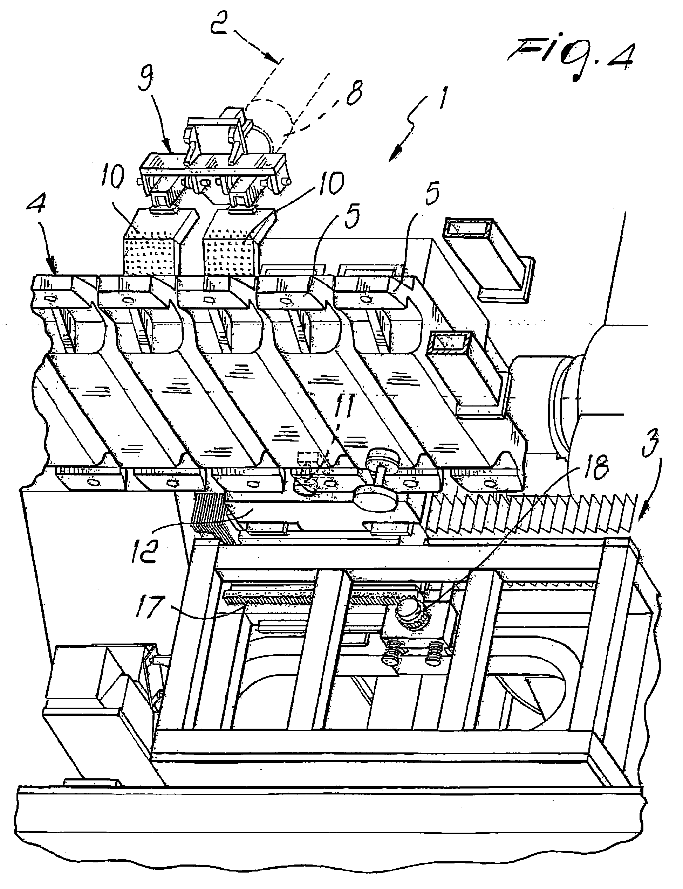

Figure 4 is a perspective bottom view of the guiding system of the skimmers of the apparatus;
Figure 5 is a rear elevation view of a first step of the operation of the skimmers;
Figure 6 is a view, similar to Figure 5, of a subsequent step of the operation of the skimmers;
Figure 7 is a view, similar to Figure 6, of a final step of the operation of the skimmers;

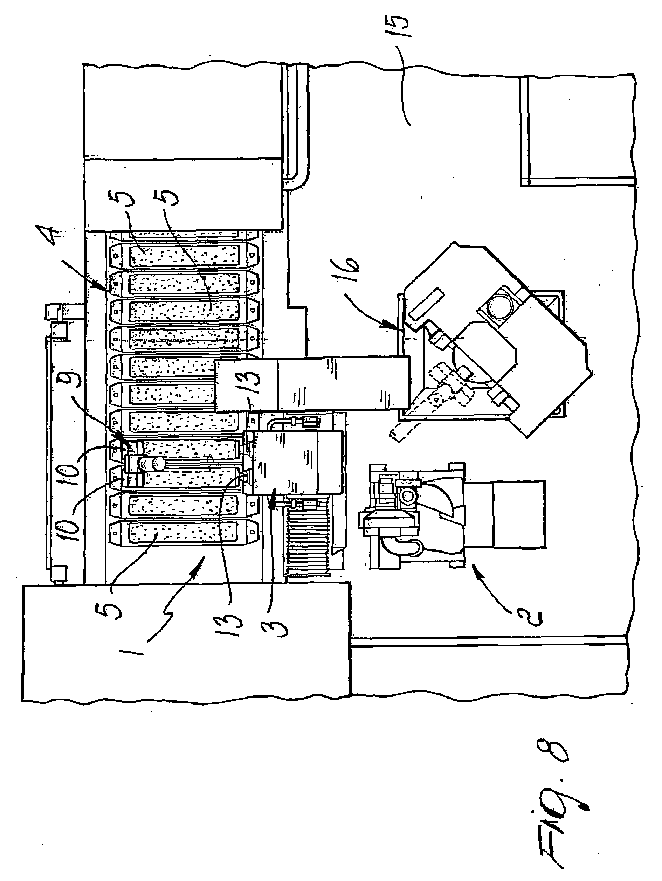

Figure 8 is a plan view of the apparatus according to the invention.

With reference to the cited figures, the device according to the invention, generally designated by the reference numeral 1, comprises an anthropomorphic robot 2, which is rigidly coupled to a positioning and chasing unit 3, which is adjacent to the conveyor belt 4 of the processing plant, which is constituted, in the specific case, by a plant for recovering lead obtained from recycled batteries.

The conveyor belt 4 comprises a series of cast iron trays 5. Each of the trays 5 contains molten lead 6, on the surface of which the slag 7 to be eliminated is present.

The anthropomorphic robot, having six axes, is adapted to move through space, according to a correct working cycle described hereinafter, the tools that automatically remove the slag.

The robot 2 comprises an arm 8, on which it is possible to fit a skimmer assembly 9, which in the specific case has two parallel skimmers 10.

The positioning and chasing unit 3 has an electropneumatic system, which comprises an abutment 11, which can move between two trays 5, thus providing a movable reference, used by the control of the robot, which is provided at each cycle, in practice eliminating any aspect linked to the accumulation of errors.

The movable abutment 11 is constituted by a wheel associated with a pneumatically-actuated arm.

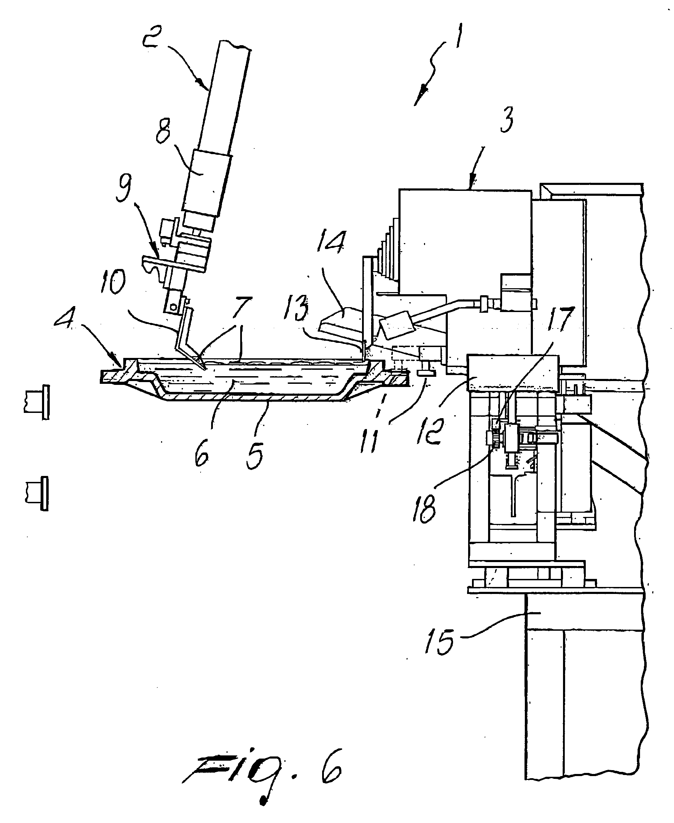

When the movable abutment 11 is inserted between two trays 5, as shown in dashed lines in Figure 6, the positioning and chasing unit 3 is rigidly coupled, in its advancement motion, to the conveyor belt 4.

The system whith the movable abutment 11 might be replaced with a mechanically different system or with a system of the non-mechanical type, for example an artificial vision system, i.e. a camera based system.

The unit 3 is associated with a slider 12, which also supports a complementary skimmer assembly 13, which acts in cooperation with the skimmer assembly, separating the slag from the rim of the cast iron tray.

The slag eliminated by the skimmers is discharged into a discharge area 14, which is adapted to accommodate the material removed from the cast iron trays.

The apparatus also comprises a turntable with a tool changing unit 16, which cleans the skimmers 10 of the slag and keeps them at the correct temperature for using them at each cycle in repetitive operating conditions.

Pyrometers in the tool changing area are adapted to detect the temperatures remotely, so as to report any tools that do not reach the correct temperature and exclude them from the cycle.

A rack 17 is rigidly coupled to the slider 12 and engages, during the translational motion that the slider 12 performs when it is moved by the conveyor belt 4, a pinion 18, which is associated with an encoder connected to a means for the electronic control of the apparatus.

The apparatus also comprises a footing 15 made of iron members, which is particularly strong and suitable to support all of the cited assemblies.

The footing 15 is laterally adjacent to the conveyor belt 4 in replacement of the conventional operator platform.

The apparatus includes an electrical panel, dedicated to all the automatic systems not managed by the robot, and all the accident-prevention protections required according to statutory provisions.

The operation of the deslagging machine apparatus according to the invention is as follows.

Initially, there is a step for preheating the assemblies, because all the parts that make contact with the molten metal must be brought to a temperature that is higher than that of the metal itself.

Heating is performed, for example, by methane-powered blowtorches that operate entirely automatically also as regards the management of the safeties of the electric valves for the gas.

Once preheating has ended, the robot grips the tool, i.e., the skimmer assembly 9, by means of an automatic coupling system, and is arranged in a cycle start position.

At the same time, the positioning and chasing unit 3 is coupled automatically by means of the insertion of the movable abutment 11 between two trays 5, which determines the chasing step.

The robot 2 performs the deslagging cycle in the molten metal bath by inserting one skimmer 10 at one end of a tray 5 and skimming the surface of the molten metal 6 until it encounters the corresponding complementary skimmer 13, which performs a limited movement starting from the opposite end of the tray.

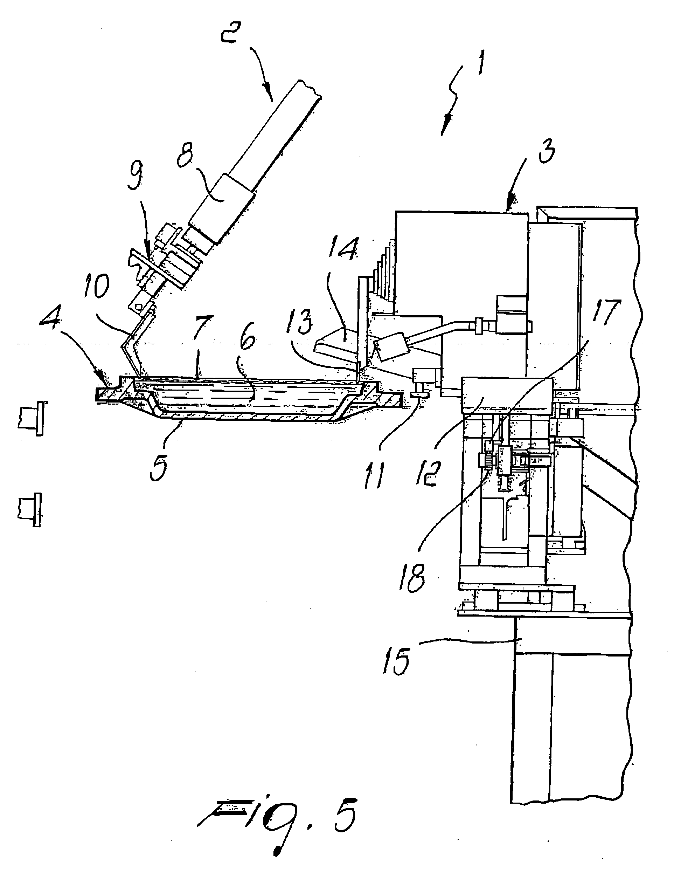

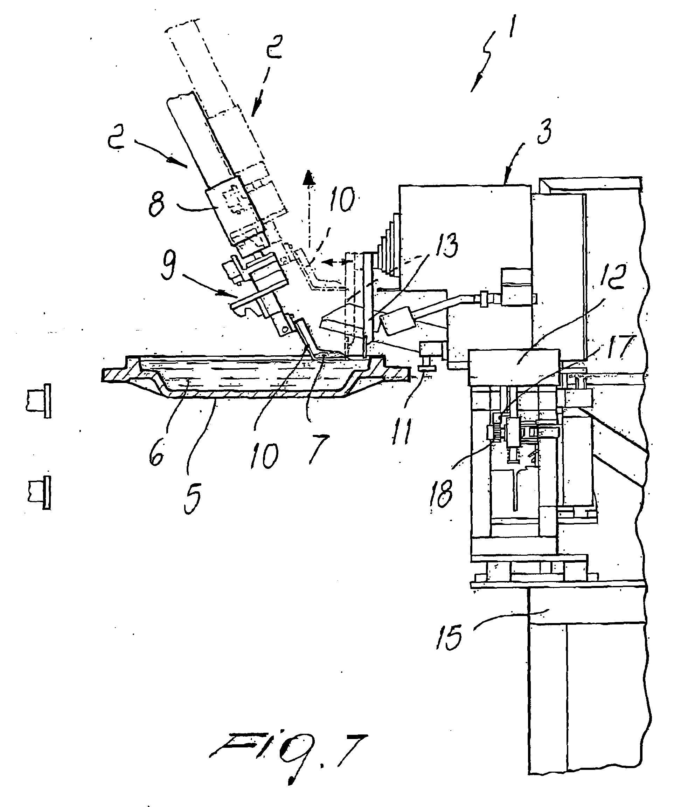

These steps are illustrated schematically in Figures 5 to 7.

Once the deslagging step has ended, the robot moves toward the rotating table 16 for the tool changing cycle.

At the same time, the coupling system 11 returns to the original retracted position, ready to restart the cycle.

At this point, the robot 2 grips the tool, i.e., the skimmer assembly 9, and the cycle restarts.

Merely by way of example, the cycle time is approximately 11.5 seconds.

In practice it has been found that the invention achieves the intended aim and objects, an automatic deslagging apparatus being provided which has considerable advantages with respect to the traditional manual system.

In addition to the obvious advantage of eliminating the presence of the operator in the polluted environment, the apparatus according to the invention offers higher productivity due to the performance of the robot.

The apparatus according to the invention also allows reduced production costs, because a single operator, acting as an operations supervisor, performs the work of five operators per on-plant shift in the traditional system.

The apparatus according to the invention offers higher safety as regards production organization, because the plant has a known productivity and is not affected by the performance of the operators.

A particularly advantageous characteristic of the apparatus according to the present invention is the positioning and chasing system, which constitutes a sort of seventh axis, with robot guiding functions with respect to the other six axes, and is integrated in the positioning and chasing unit 3 and ensures the correct positioning of the tools within the casting dies, regardless of their speed and position.

The apparatus according to the invention is susceptible of numerous modifications and variations within the scope of the appended claims. All the details may be replaced with technical equivalent elements.

The materials used, as well as the dimensions, may of course be any according to the requirements and the state of the art.

## Claims

1. An automatic deslagging apparatus, particularly for plants for processing nonferrous metals, **characterized in that** it comprises:
an anthropomorphic robot, which is coupled to a positioning and chasing unit which is adjacent to a conveyor belt that comprises trays, each of said trays containing molten metal, slag to be eliminated being present on the surface of said molten metal;
a skimmer assembly, actuated by said robot, adapted to act on the surface of said metal in order to eliminate said slag;
a complementary skimmer assembly, which is rigidly coupled to said positioning and chasing unit and cooperates with said skimmer assembly in order to eliminate said slag;
a temporary engagement means, adapted to temporarily rigidly couple in their movement said conveyor and said positioning and chasing unit;
a discharge area receiving said slag removed by means of said skimmer assembly;
a cleaning means for cleaning said skimmer assembly, said cleaning means being adapted to clean said skimmer assembly at the end of the cycle in order to provide a clean skimmer assembly for a new cycle.

2. The apparatus according to claim 1, **characterized in that** said conveyor belt comprises a series of cast iron trays, each of said trays containing molten lead.

3. The apparatus according to claim 1 or 2, **characterized in that** the anthropomorphic robot, provided with six axes, comprises an arm on which it is possible to mount said skimmer assembly, which comprises one or more parallel skimmers.

4. The apparatus according to one or more of the preceding claims, **characterized in that** said positioning and chasing unit comprises an electropneumatic system, which comprises said temporary engagement means.

5. The apparatus according to one or more of the preceding claims, **characterized in that** said temporary engagement means is constituted by an abutment which can move between two of said trays.

6. The apparatus according to one or more of the preceding claims, **characterized in that** said movable abutment is constituted by a wheel associated with a pneumatically-actuated arm.

7. The apparatus according to one or more of the preceding claims, **characterized in that** it comprises a slider, which supports said positioning and chasing unit and said complementary skimmer assembly.

8. The apparatus according to one or more of the preceding claims, **characterized in that** said means for cleaning the skimmer assembly is constituted by a tool changing means, which comprises a tumtable with a tool changing system, which cleans the skimmers of the slag and keeps them at the correct temperature for using them at each cycle in repetitive working conditions.

9. The apparatus according to one or more of the preceding claims, **characterized in that** said means for cleaning the skimmer assembly is constituted by a tool changing means, which comprises a static tool magazine.

10. The apparatus according to one or more of the preceding claims, **characterized in that** it comprises a rack, which is rigidly coupled to said slider and engages, during the translational motion that said slider performs when it is moved by said conveyor belt, a pinion associated with an encoder, which is connected to a means for the electronic control of the apparatus.

11. The apparatus according to one or more of the preceding claims, **characterized in that** it comprises a footing made of iron members, which is adapted to support the components of said apparatus.

12. The apparatus according to one or more of the preceding claims, **characterized in that** it comprises an electrical panel, which is dedicated to all the automatic systems not managed by the robot, and all the accident-prevention protections required according to statutory provisions.

13. The apparatus according to one or more of the preceding claims, **characterized in that** it comprises a heating means adapted to preheat the components of the apparatus that make contact with said molten metal, so that said components are at a higher temperature than said metal.

14. The apparatus according to one or more of the preceding claims, **characterized in that** said heating means comprises methane blowtorches, the operation of which is entirely automatic, also as regards the management of the safeties of the electric valves for the gas.

15. The apparatus according to one or more of the preceding claims, **characterized in that** said robot performs a deslagging cycle in the molten metal bath by inserting a skimmer at one end of a tray and skimming the surface of the molten metal until it encounters the corresponding complementary skimmer, which performs a limited movement starting from the opposite edge of the tray.
